# EUROPEAN PATENT APPLICATION

(11) **EP 1 881 709 A1**
(43) Date of publication of application: **23.01.2008**
(21) Application number: 06253731.1
(22) Date of filing: 17.07.2006
(51) Int. Cl.: H04N 9/64

(54) **Television apparatus having a scart connector**

(71) Applicant: Sony España SA, 08032 Barcelona (ES)
(72) Inventor: Osorio, Enrique, Viladecavalls, 08032 Barcelona (ES)
(74) Representative: Merryweather, Colin Henry

(57) **Abstract**

A television apparatus has a SCART connector and a circuit which processes input television signals received on the SCART connector in either an RGB format or an S-video format. An RGB conversion circuit is operable to convert luminance and chroma signals received from Pins 20 and 15 of the SCART connector into red, green and blue signals. An RGB switch circuit is switchable to selectively output input television signals received from Pins 15,11 and 7 of the SCART connector or the red, green and blue signals received from the RGB conversion circuit. A controller detects when the SCART connector is receiving input luminance and chroma signals and when the SCART connector is receiving red, green and blue signals, and controls switching of the RGB switch circuit in accordance with such detection. Thus the handling of signals in the RGB format or an S-video format is automatic and does not require a user setting.

## Description

The present invention relates to the provision of a SCART connector in a television apparatus.

SCART (which stands for Syndicat des Constructeurs d'Appareils Radiorécepteurs et Téléviseurs) is a standard for connecting audio-visual equipment together. The official standard for SCART is CENELEC document number EN 50049-1. SCART is also known as Péritel (especially in France) and Euroconnector but the name SCART will be used exclusively herein. The standard defines a 21-pin connector (herein after a SCART connector) for carrying analog television signals. Various pieces of equipment may be connected by cables having a plug fitting the SCART connectors. Television apparatuses commonly include one or more SCART connectors.

Although a SCART connector is bidirectional, the present invention is concerned with the use of a SCART connector as an input connector for receiving signals into a television apparatus. A SCART connector can receive input television signals either in an RGB format in which the red, green and blue signals are received on Pins 15, 11 and 7, respectively, or alternatively in an S-Video format in which the luminance (Y) and chroma (C) signals are received on Pins 20 and 15. As a result of the common usage of Pin 15 in accordance with the SCART standard, a SCART connector cannot receive input television signals in an RGB format and in an S-Video format at the same time.

Consequently many commercially available television apparatuses include a separate SCART connectors each dedicated to receive input television signals in one of an RGB format and an S-Video format. This limits the functionality of the SCART connectors. In practical terms, the number of SCART connectors which can be provided on a television apparatus is limited by cost and space considerations. However, different users wish the input a wide range of different combinations of formats of television signals, depending on the equipment they personally own and use. However, the provision of SCART connectors dedicated to input television signals in one of an RGB format and an S-Video format limits the overall connectivity of the television apparatus. Furthermore, for many users the different RGB format and S-Video format are confusing. Some users may not understand or may mistake the format of a television signal being supplied on a given cable from a given piece of equipment. This can result in the supply of input television signals of an inappropriate format for the SCART connector concerned. It would be desirable to reduce these problems.

According to the present invention, there is provided a television apparatus comprising:
a SCART connector;
an RGB conversion circuit connected to receive input televison signals from Pins 20 and 15 of the SCART connector, the RGB conversion circuit being operable to convert luminance and chroma signals received from Pins 20 and 15 of the SCART connector into red, green and blue signals and to supply the red, green and blue signals on an output;
an RGB switch circuit connected to Pins 15, 11 and 7 of the SCART connector and to the output of the RGB conversion circuit, the RGB switch circuit being switchable to selectively output input television signals received from Pins 15, 11 and 7 of the SCART connector or the red, green and blue signals received from the RGB conversion circuit; and
a controller arranged to detect when the SCART connector is receiving input luminance and chroma signals on Pins 20 and 15 and when the SCART connector is receiving red, green and blue signals on Pins 15,11 and 7, the controller being arranged to control switching of the RGB switch circuit in accordance with such detection.

The present invention allows a single SCART socket to receive a television signal in both of an RGB format or an S-Video format, albeit at different times. The television apparatus includes circuitry which processes the input television signals and selectively either (a) outputs red, green and blue (R, G and B) signals received on Pins 15, 11 and 7 of the SCART connector or (b) converts luminance and chroma signals received from Pins 20 and 15 of the SCART connector into R, G and B signals which are then output. This is achieved by switching of the RGB switch circuit. The R, G and B signals may then be used by the television apparatus to display an image on a display screen. Furthermore, the controller detects the format of the received television signal and controls the switching in accordance with the detection result. This means that the television apparatus automatically detects the format and handles the input television signal appropriately. As a result it is not necessary for a user to making a setting manually. This reduces the chance of error, particularly given that many users might not understand the different formats.

To allow better understanding, an embodiment of the present invention will now be described by way of non-limitative example with reference to the accompanying drawings, in which:
Fig. 1 is a perspective view of a television apparatus;
Fig. 2 is a diagram of a SCART socket and a video processor of the television apparatus; and
Fig. 3 is a state diagram of the operation of the television apparatus.

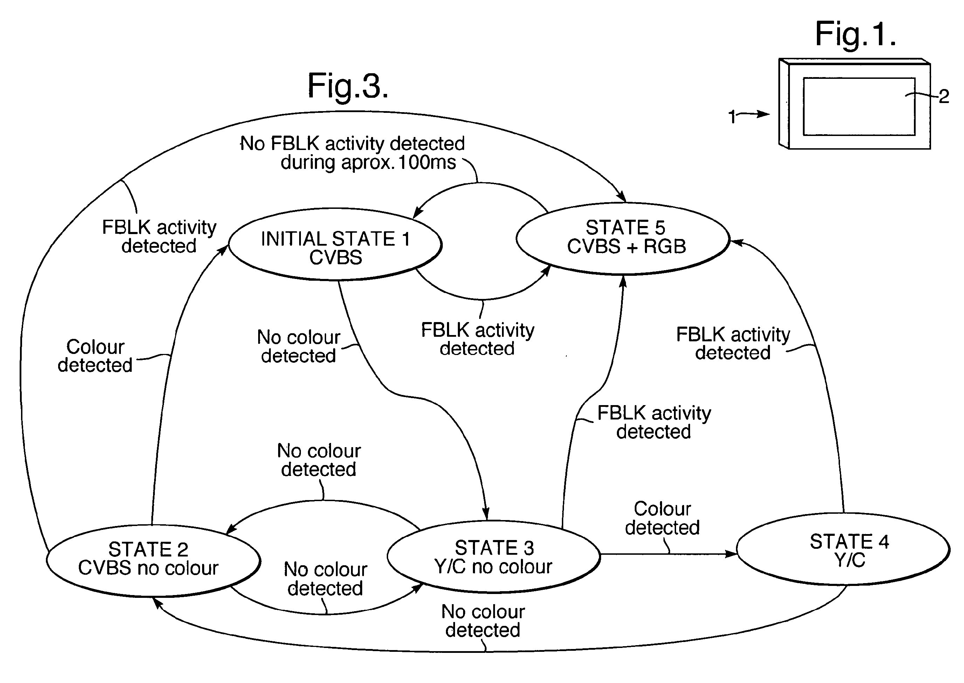

A television apparatus 1 having a display screen 2 is shown in Fig. 1. The display screen may be of any type, for example a liquid crystal display (LCD), a plasma display or a cathode ray tube (CRT) display.

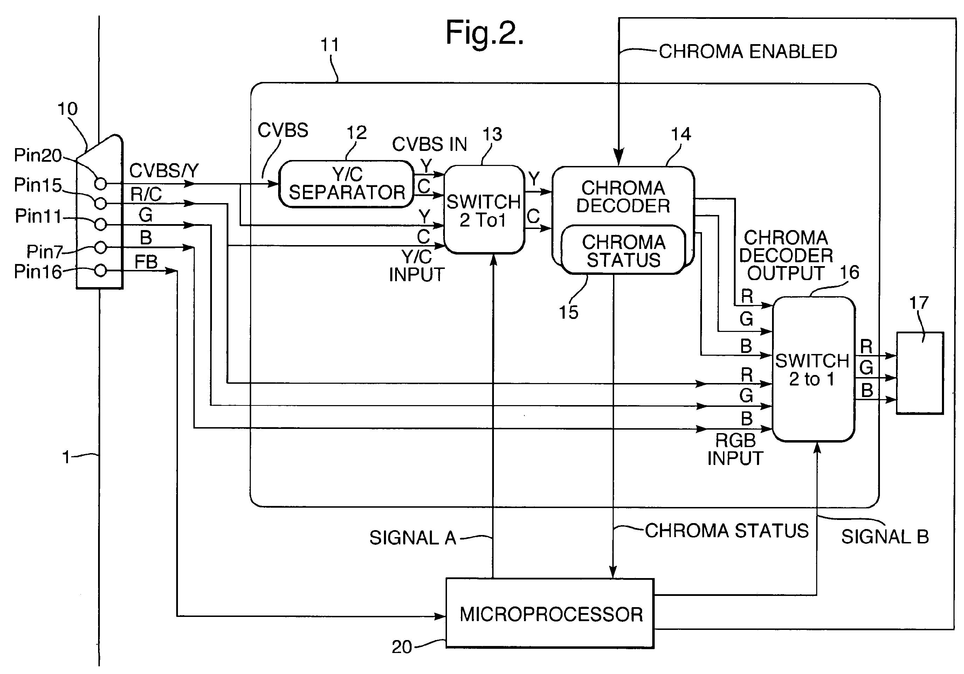

As shown in Fig.2, the television apparatus 1 has a SCART connector 10 connected to a video processing circuit 11 for processing input television signals received by the SCART connector 10.

The SCART connector 10 is arranged in accordance with the SCART standard. Accordingly, the SCART connector 10 has twenty-one pins of which Pins 7, 11, 15, 16 and 20 are illustrated.

In accordance with the SCART standard:
when an RGB signal is input to the SCART connector 10, R, G and B signals are received on Pins 15, 11 and 7, respectively, and a fast-blanking (FB) signal is received on Pin 16;
when a composite (CVBS) signal is input to the SCART connector 10, a composite (CVBS) signal is received on Pin 20, so may be received simultaneously with an RGB signal; and
when an S-Video signal is input to the SCART connector 10, a luminance and a chroma signal are received on Pins 20 and 15, respectively, so cannot be received simultaneously with an RGB signal due to Pin 15 being used in common.

Other signals are received on the other Pins of the SCART connector 10 in accordance with the SCART standard but these do not need to be described in the context of the present invention.

The video processing circuit 11 is connected to Pins 7, 11, 15 and 20 of the SCART connector 10 and therefore receives the television signals received on those pins. The video processing circuit 11 is arranged as follows.

The video processing circuit 11 comprises a Y/C separator 12, a Y/C switch circuit 13, and a chroma decoder 14 which together form an RGB conversion circuit which is operable to selectively convert television signals in a CVBS format or a composite format into R, G and B signals.

The Y/C separator 12 is connected to Pin 20 of the SCART connector 10 and which therefore receives a CVBS signal when input to the SCART connector 10. The Y/C separator 12 is arranged to extract a luminance (Y) signal and a chroma (C) signal from a CVBS signal supplied to the Y/C separator 12.

The Y/C switch circuit 13 has two inputs.

The first input of the Y/C switch circuit 13 is connected to Pins 20 and 15 of the SCART connector 10 and therefore receives Y and C signals when television signals of the S-Video format are input to the SCART connector 10.

The second input of the Y/C switch circuit 13 is connected to the output of the Y/C separator 12 and therefore receives Y and C signals extracted by the Y/C separator 12.

The Y/C switch circuit 13 is switchable to output either of its inputs on its output. Therefore switching of the Y/C switch circuit 13 provides selective output of Y and C signals from Pins 20 and 15 of the SCART connector 10 or Y and C signals derived from a CVBS signal by the Y/C separator Switching of the Y/C switch circuit 13 is controlled by a control signal SIGNAL A.

The chroma decoder 14 is connected to the output of the Y/C switch circuit 13 and therefore receives the Y and C signals output by the Y/C switch circuit 13. The chroma decoder 14 is arranged to convert the Y and C signals input thereto into R, G and B signals which are output at the output of the chroma decoder 14. Therefore, depending on the setting of the Y/C switch circuit 13, the chroma decoder 14 outputs R, G and B signals derived either from Y and C signals received on Pins 20 and 15 of the SCART connector 10 or from a CVBS signal received on Pin 20 of the SCART connector 10.

The chroma gain of the chroma decoder 14 is controlled by a control signal CHROMA ENABLED. As described further below, chroma gain is controlled to deactivate colour when a monochrome signal is received, and also when trying to detect the format of the television signal received by the SCART connector 10.

The chroma decoder 14 also includes a chroma status detector 15 which detects the presence of a valid C signal supplied to the chroma decoder 14. The chroma status detector 15 outputs a detection signal CHROMA STATUS indicating the presence of a valid C signal, which is used as described below.

The video processing circuit 11 further comprises an RGB switch circuit 16. The RGB switch circuit 16 has two inputs.

The first input of the RGB switch circuit 16 is connected to Pins 15, 11 and 7 of the SCART connector 10 and therefore receives R, G and B signals when television signals of the RGB format are input to the SCART connector 10.

The second input of the RGB switch circuit 16 is connected to the output of the Y/C switch circuit 14 and therefore receives the R, G and B signals output by the Y/C switch circuit 14.

The RGB switch circuit 16 is switchable to output either of its inputs on its output. Therefore switching of the Y/C switch circuit 13 provides selective output of R, G and B signals from Pins 15, 11 and 7 of the SCART connector 10 or R, G and B signals derived by the RGB conversion circuit formed by the Y/C separator 12, the Y/C switch circuit 13, and the chroma decoder 14. Switching of the RGB switch circuit 16 is controlled by a control signal SIGNAL B.

The R, G and B signals output by the RGB switch circuit 16 are supplied to a drive circuit 17 which drives the display screen 2 in accordance with those R, G and B signals to display an image on the display screen 2.

The video processing circuit 11 is controlled by a controller 20 which may be implemented by a microprocessor running an appropriate program. The controller 20 detects the format of input television signals received by the SCART connector 10 and controls the video processing circuit 11 to operate in accordance with the detected format.

The controller 20 controls the video processing circuit 11 by generating the control signals SIGNAL A, CHROMA ENABLED and SIGNAL B which are supplied to the Y/C switch circuit 13, the chroma decoder 14 and the RGB switch circuit 16 as described above.

The controller 20 detects the format by monitoring two signals.

Firstly, the controller 20 monitors whether the signal on Pin 16 of the SCART connector 10 is an active FB signal. This occurs when an RGB signal is input to the SCART connector 10 and so effectively allows detection of an RGB signal. When considering the signal on Pin 16 of the SCART connector 10, the controller 20 detects an RGB signal as being present when the FB signal is active at any time within a predetermined period before the current time. The predetermined period is long enough to detect an RGB signal at any position in the frame of the image, thereby allowing the detection of small boxes which may have been introduced onto the television signal by a piece of equipment. To achieve this the predetermined period is typically at least 33ms, for example 100ms.

Secondly, the controller 20 monitors the detection signal CHROMA STATUS output by the chroma status detector 15 of the chroma decoder 14. The detection signal CHROMA STATUS, when considered in combination with the switching state of the Y/C switch circuit 13 controlled by the control signal SIGNAL A, effectively allows detection of whether the input television signal received by the SCART connector 10 is a CVBS signal or is an S-Video signal. In particular, if chroma is detected when the Y/C switch circuit 13 outputs the first input from Pins 20 and 15, then input television signal is detected as an S-Video signal, and if chroma is detected when the Y/C switch circuit 13 outputs the second input from the Y/C separator 12, then input television signal is detected as a CVBS signal.

In particular, the controller 20 controls the video processing circuit 11 in accordance with the state diagram shown in Fig. 3 which illustrates the states of the video processing circuit 11 and the transitions between states effected by the controller 20. The controller 20 controls the video processing circuit 11 in the various states by setting the control signals SIGNAL A, CHROMA ENABLED and SIGNAL B as shown in the following table:

| | SIGNAL A | SIGNAL B | CHROMA ENABLED |
|---|---|---|---|
| State 1 (CVBS) | CVBS | CD | YES |
| State 2 (CVBS no color) | CVBS | CD | NO |
| State 3 (Y/C no color) | Y/C | CD | NO |
| State 4 (Y/C) | Y/C | CD | YES |
| State 5 (RGB +CVBS) | CVBS | FB | YES |

In the table:
the entries Y/C and CVBS mean that the control signal SIGNAL A controls the Y/C switch circuit 13 to switch to, respectively, the first input corresponding to an input S-Video signal and the second input corresponding to an input CVBS signal;
the entry CD means that the control signal SIGNAL B controls the RGB switch circuit 16 to switch to the first input from the chroma decoder 14;
the entry FB means that the control signal SIGNAL B controls the RGB switch circuit 16 to switch in accordance with the FB signal being active to the second input from Pins 15, 11 and 7 of the SCART connector 10 and in accordance with the FB signal being inactive to the first input from the chroma decoder 14; and
the entries YES and NO mean that the control signal CHROMA ENABLED controls the chroma gain of the chroma decoder 14 to respectively activate and deactivate the colour.

The controller 20 effects the transitions "Color Detected" or " No color detected" when the detection signal CHROMA STATUS indicates the presence of a valid C signal. The controller 20 effects the transitions "FBLK activity detected" and "No FBLK activity detected during approx 100ms" when the FB signal on Pin 16 is active or not active within the predetermined period.

The control effected by the controller 20 in accordance with the state diagram of Fig. 3 may be understood as follows.

The initial state is State 1 (CVBS). In the absence of the FB signal on Pin 16 being active, the following applies.

In State 1 (CVBS), the input television signal is taken to be a CVBS signal received on Pin 20 of the SCART connector 10. Accordingly, (1) the control signal SIGNAL A causes the Y/C switch circuit 13 to output the Y and C signals derived by the Y/C separator 12 from the signal supplied from Pin 20, (2) the control signal CHROMA ENABLED causes the chroma gain of the chroma decoder 14 to be enabled, and (3) the control signal SIGNAL B causes the RGB switch circuit 16 to output R, G and B signals derived by the chroma decoder 14 from the Y and C signals supplied from the Y/C switch circuit 13.

In State 1 (CVBS), if no colour is detected, a transition to State 3 (CVBS no color) occurs. This state is used to detect if the input television signal is an S-Video signal. State 3 (CVBS no color) is the same as State 1 except that the control signal SIGNAL A causes the Y/C switch circuit 13 to output the signals supplied from Pins 20 and 15 of the SCART connector 10. In State 3 (CVBS no color), it is detected whether the detection signal CHROMA STATUS indicates that colour is present or absent. If present, this is effectively a detection of the input television signal being in S-Video format, so a transition to State 4 (Y/C) occurs.

In State 4 (Y/C), (1) the control signal SIGNAL A causes the Y/C switch circuit 13 to output the Y and C signals supplied from Pins 20 and 15, (2) the control signal CHROMA ENABLED causes the chroma gain of the chroma decoder 14 to be enabled, and (3) the control signal SIGNAL B causes the RGB switch circuit 16 to output R,G and B signals derived by the chroma decoder 14 from the Y and C signals supplied from the Y/C switch circuit 13.

If in State 3 (CVBS no color), it is detected that the detection signal CHROMA STATUS indicates that colour is absent, the input television signal is not in S-Video format, so the absence of colour in State 1 (CVBS) means that the input signal is a monochrome CVBS signal. Accordingly, a transition to State 2 (CVBS no color) occurs. State 2 (CVBS no color) is the same as State 1 except that the control signal CHROMA ENABLED causes the chroma gain of the chroma decoder 14 to be disabled.

In State 3 (CVBS no color), if the detection signal CHROMA STATUS indicates that colour becomes present, a transition back to State 1 (CVBS) occurs.

In each of States 1 to 4, a transition to State 5 (CVBS + RGB) is made when the controller detects that the FB signal on Pin 16 is active. In State 5, the control signal SIGNAL B controls the RGB switch circuit 16 to switch in accordance with the FB signal. The net result is that whenever the FB signal on Pin 16 is active this is a detection that the input television signal is in RGB format. Accordingly, the RGB switch circuit 16 is switched to the second input from Pins 15, 11 and 7 of the SCART connector 10.

In State 5 (CVBS + RGB), when the FB signal on Pin 16 is inactive, this is a detection that the input indicates that the input television signal the RGB switch circuit 16 is switched to the first input from the chroma decoder 14. In this case, as the control signal SIGNAL A is set to CVBS, RGB switch circuit 16 outputs R, G and B signals which have been derived from a CVBS signal input at Pin 20 of the SCART connector 10.

A transition from State 5 (CVBS + RGB) to State 1 (CVBS) occurs when the FB signal on Pin 16 is inactive for more than the predetermined period, this being a detection that the input television signal is no longer in an RGB format.

## Claims

1. A television apparatus comprising:
a SCART connector;
an RGB conversion circuit connected to receive input televison signals from Pins 20 and 15 of the SCART connector, the RGB conversion circuit being operable to convert luminance and chroma signals received from Pins 20 and 15 of the SCART connector into red, green and blue signals and to supply the red, green and blue signals on an output;
an RGB switch circuit connected to Pins 15, 11 and 7 of the SCART connector and to the output of the RGB conversion circuit, the RGB switch circuit being switchable to selectively output input television signals received from Pins 15, 11 and 7 of the SCART connector or the red, green and blue signals received from the RGB conversion circuit; and
a controller arranged to detect when the SCART connector is receiving input luminance and chroma signals on Pins 20 and 15 and when the SCART connector is receiving red, green and blue signals on Pins 15, 11 and 7, the controller being arranged to control switching of the RGB switch circuit in accordance with such detection.

2. A television apparatus according to claim 1, wherein the controller is arranged to detect when the SCART connector is receiving red, green and blue signals on Pins 15, 11 and 7 by detecting reception of an input fast blanking signal on Pin 16 of the SCART connector.

3. A television apparatus according to claim 2, wherein the controller is arranged to detect when the SCART connector is receiving red, green and blue signals on Pins 15, 11 and 7 by detecting reception of an input fast blanking signal on Pin 16 of the SCART connector within a predetermined period before the current time, the predetermined period being at least 33ms.

4. A television apparatus according to any one of the preceding claims, wherein the RGB conversion circuit is selectively operable either
to perform a first operation of converting luminance and chroma signals received from Pins 20 and 15 of the SCART connector into red, green and blue signals and to supply the red, green and blue signals on the output; or
to perform a second operation of converting a composite signal received from Pin 20 of the SCART connector into red, green and blue signals and to supply the red, green and blue signals on the output, and
the controller is further arranged to detect when the SCART connector is receiving a composite signal on Pin 20, and is arranged to control the RGB conversion circuit to perform the first operation when detecting that the SCART connector is receiving input luminance and chroma signals on Pins 20 and 15 and to perform the second operation when detecting that the SCART connector is receiving a composite signal on Pin 20.

5. A television apparatus according to claim 4, wherein the RGB conversion circuit comprises
a Y/C separator connected to receive an input televison signal from Pin 20 of the SCART connector, the Y/C separator being operable to separate a composite signal into luminance and chroma signals and to supply the luminance and chroma signals on an output; and
a Y/C switch circuit connected to Pins 20 and 15 of the SCART connector and to the output of the Y/C separator, the Y/C switch circuit being switchable to selectively output input television signals received from Pins 20 and 15 of the SCART connector or the luminance and chroma signals received from the Y/C separator, and
the controller is arranged to control the RGB conversion circuit to perform the first and second operation by controlling the controlling the Y/C switch circuit.

6. A television apparatus according to claim 5, wherein the RGB conversion circuit further comprises a chroma decoder connected to receive the output of the Y/C circuit, the chroma decoder being operable to convert luminance and chroma signals received from the output of the Y/C switch circuit into red, green and blue signals and to supply the red, green and blue signals on the output of the RGB conversion circuit.
